# EUROPEAN PATENT SPECIFICATION

(11) **EP 3 496 932 B1**
(45) Date of publication and mention of the grant of the patent: **12.04.2023**
(21) Application number: 17840058.6
(22) Date of filing: 04.08.2017
(51) Int. Cl.: B29C 64/106, B29C 64/209, B29L 31/00, B33Y 30/00, B29C 35/16, B29C 64/245, B29C 64/364

(54) **DEVICE FOR PRINTING A THREE DIMENSIONAL COSMETIC ARTICLE FROM A BUILD MATERIAL COMPRISING A COSMETIC FORMULA**
VORRICHTUNG ZUM DRUCKEN EINES DREIDIMENSIONALEN KOSMETISCHEN ARTIKELS AUS EINEM BAUMATERIAL MIT EINER KOSMETISCHEN FORMEL
DISPOSITIF D'IMPRESSION D'UN ARTICLE COSMÉTIQUE TRIDIMENSIONNEL À PARTIR D'UN MATÉRIAU DE CONSTRUCTION COMPRENANT UNE FORMULE COSMÉTIQUE

(30) Priority: 12.08.2016 US 201662374153 P
(43) Date of publication of application: 19.06.2019
(73) Proprietor: ELC Management LLC, Melville, NY 11747 (US)
(72) Inventor: GRAY, Timothy Patrick, New York New York 10024 (US); COHEN, Isaac David, Brooklyn New York 11229 (US); MARTINS, Agostinho, New Hyde Park New York 11040 (US); VICTOR, Bruce Laurence, Great River New York 11739 (US); CURTISS, Charles Aaron, Norwalk Connecticut 06855 (US); PAPPAS, Madalyn Ellice, Somerville Massachusetts 02145 (US)
(74) Representative: Novagraaf Group
(86) International application number: PCT/US2017/045498
(87) International publication number: WO 2018/031405

(56) References cited:
- EP-B1- 2 976 205
- WO-A1-2016/020435
- WO-A1-2016/022300
- CN-U- 203 937 193
- CN-U- 204 136 436
- CN-U- 204 914 595
- JP-A- 2001 030 696
- US-A- 5 303 141
- US-A1- 2015 314 141
- US-A1- 2016 038 655
- US-A1- 2016 075 089
- US-B2- 8 529 240
- US-B2- 9 102 098

## Description

### BACKGROUND OF THE INVENTION

### FIELD OF THE INVENTION

The present invention relates to devices for three dimensional printing. In particular, the present invention is directed to a device for printing by fusion deposition a three dimensional cosmetic article from a build material comprising a cosmetic formula.

### DESCRIPTION OF THE PRIOR ART

Three dimensional ("3D") printers for additive fabrication are well known. An example of such a printer is disclosed in U.S. Pat. No. 8,529,240 to Mayer. The device disclosed by Mayer uses a controller and other hardware, a positioning assembly with a stepper motor, an extruder and a build plate to fabricate an article from a 3D computer model via additive deposition of plastic build material. Relatively rigid plastic filament build material is fed from a spool into the extruder by the stepper motor where it is melted by the heater and extruded through a nozzle. Mayer does not disclose a piston for advancing the build material.

U.S. Pat. Appln. No. 2015/0314141 to Choi discloses a printer modified to receive and process cosmetic components. The printer is described as a device that deposits substances (dyes, pigments, etc.) at a very specific location of an underlying substrate to create a chosen desired color that is formed on the substrate. The substrate is a pre-existing supply or article of cosmetic material. In other words, Choi discloses a printer for selectively printing color to an existing cosmetic formula substrate or article, but does not disclose printing a three-dimensional cosmetic article from a build material comprising a cosmetic formula.

U.S. Pat. No. 8,172,473 to Salciarini discloses a method for manufacturing a cosmetic applicator using photopolymerization or sintering via laser light to solidify flowing build material in slices. The article produced is a cosmetic applicator (mascara brush, comb, etc.), not a cosmetic article made from a build material comprising a cosmetic formula.

WO/2016/020435 to Jaunet et al. discloses a method for additive manufacturing of a 3D object comprising a cosmetic composition by direct projection, but the method is discribed as including a pump (not shown or described) to spray (direct projection) successive layers of cosmetic build material. The build material is sprayed in droplets of relatively small size to form thin successive layers. The reference does not include an extruder for extruding build material in relatively thick layers.

WO/2016/020442 to Jaunet et al. discloses a method for additive manufacturing of a 3D object comprising a cosmetic composition by direct projection, but the method is described as using a photoactivatable material and illumination to activate the photoactivatable material. WO/2016/020454 to Jaunet et al. discloses a method for additive manufacturing of a 3D object comprising a cosmetic composition by application of a powder binding activator. WO/2016/020447 to Jaunet et al. discloses a method for additive manufacturing of a 3D object comprising a cosmetic composition by application of a photoactivatable material onto a powder. The present invention does not include photoactivatable material, powder binding activator or application of a photoactivatable material onto a powder.

Known 3D printers are not suitable for producing 3D articles from a build material comprising a cosmetic formula in successive thick layers by fusion deposition. Build materials comprising cosmetic formulas contain components such as silicones and waxes that are not readily printed in thick layers using known 3D printing technology. Such components may cause the build materials comprising cosmetic formulas to be softer in the pre-build and post build state, and to flow, harden and cool differently during the build process when compared to typical relatively hard plastic build materials used for 3D printing, particularly when printed in relatively thick successive layers.

Accordingly, there is a need for a device for printing a three dimensional cosmetic article from a build material comprising a cosmetic formula wherein the device includes an extruder for extruding successive layers of build material.

JP 2001 030696 A discloses a device having the features of the preamble of claim 1.

### BRIEF SUMMARY OF THE INVENTION

An aspect of the invention provides a device for printing a three dimensional cosmetic article from a build material comprising a cosmetic formula, as set forth in claim 1.

### BRIEF DESCRIPTION OF THE DRAWINGS

FIG. 1 is front, top and left side perspective view of a 3d printer incorporating the device of the invention;
FIG. 2 is front, top and left side perspective enlarged view of the device;
FIG. 3 is an enlarged view of the extruder of the device;
FIG. 4 is a sectional view of the extruder shown in FIG. 3;
FIG. 5 is a sectional view of the extruder shown in FIG. 3;
FIG. 6 is an exploded perspective view of the build plate of the device;
FIG. 7 is an assembled perspective view of the build plate in FIG. 6;
FIG. 8 is an exploded perspective view of the build plate of the device showing alternative inserts for the build plate;
FIG. 9 is a top, front and left side perspective view of the fan assembly;
FIG. 10 is a bottom, front and left side perspective view of the fan assembly shown in FIG. 9;
FIG. 11 is a top, front and left side perspective view of the fan duct of the assembly shown in FIGS. 9 and 10;
FIG. 12 is a top, rear and right side perspective view of the fan duct of the assembly shown in FIGS. 9 and 10;
FIG. 13 is an exploded top, front and left side perspective view of the fan duct of the assembly shown in FIGS. 9 and 10;
FIG. 14 is a bottom and front perspective view of the device; and
FIG. 15 is a front and top perspective and sectional view of various embodiments of a build material stick.

### DETAILED DESCRIPTION OF THE INVENTION

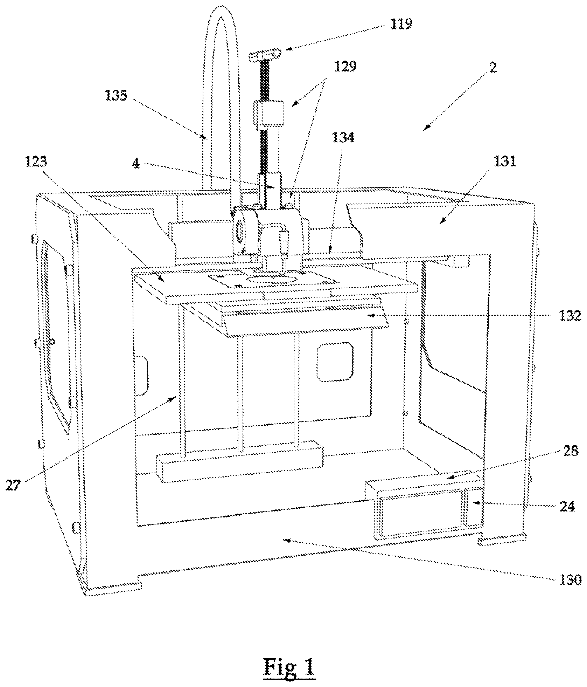

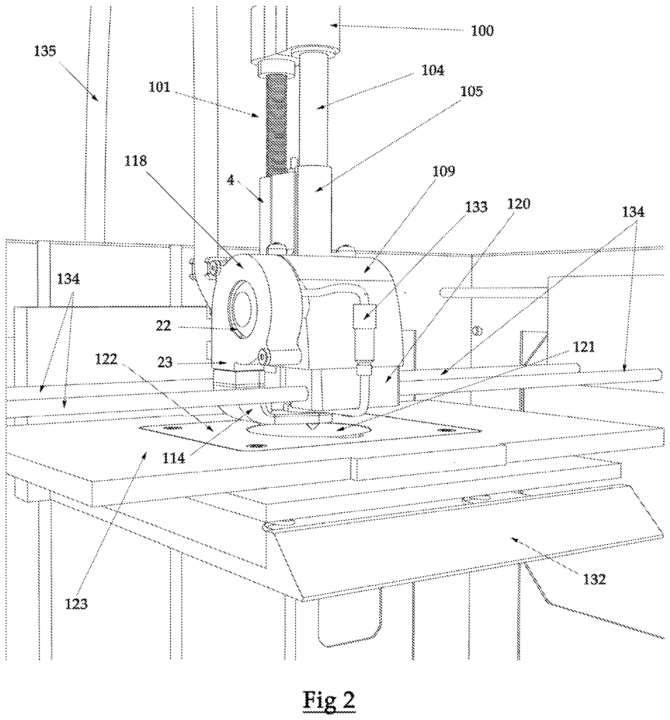

Referring now to FIGS. 1-15, a device for printing a three dimensional article from a build material comprising a cosmetic formula is shown generally at reference number 2. A print head assembly 129 is supported on a base machine 130, such as, for example, a MakerBot Replicator 2 or similar printer. The base machine has a positioning assembly (shown generally at 27) including a top frame rail 131, x-axis support platform 132 and gantry rails 134 for the supporting and positioning the print head assembly 129. A flexible wiring sheath 135 connects the print head assembly 129 to the base machine 130 in electrical communication. The print head assembly 129 includes an extruder 4 with a barrel 105 having an inner wall 5 defining a cylinder 6. The cylinder 6 has a first end 7 and a second end 8. A piston 104 is mounted in the first end 7 of the cylinder 6 such that the piston 104 is able to advance and retract in the cylinder 6. The piston 104 has a front wall 9 and a rear wall 10 connected by an outwardly directed sidewall 11. The sidewall 11 is shaped and dimensioned to be received and fit closely in the cylinder 6. The front wall 9 of the piston 104 is directed toward the second end 8 of the cylinder 6. The piston may be made of any suitable material, but a preferred material is 6061 aluminum. A seal 106 may be provided between the sidewall 11 of the piston 104 and the inner wall 5 of the cylinder 6. The seal is preferably an elastomeric O-ring secured in a circumferential groove 3 in the sidewall 11 of the piston 104. The seal is preferably an oil-resistant Buna-N material.

A nail 113 is secured to the barrel 105 at the second end 8 of the cylinder 6. The nail 113 may be made of any suitable material, but a preferred material is 6061 aluminum. The nail 113 has a hollow portion 12 in fluid communication with the cylinder 6. At an end of the nail opposite the cylinder 6, the hollow portion 12 terminates in a hemispherical chamber 111. An extrusion nozzle 112 is also secured to the opposite end of the nail 113. The nozzle 112 is a 4mm nozzle made of brass. The extrusion nozzle 112 has a nozzle outlet 13 at a distal end and a nozzle inlet 15 at a proximal end connected in fluid communication by a nozzle duct 14. The hemispherical chamber 111 of the nail 113 is in fluid communication with the nozzle inlet 15, and the nozzle inlet 15 is in fluid communication with the nozzle outlet 13 via the nozzle duct 14.

A reservoir 16 for receiving a quantity of the build material is defined by a portion of the cylinder 6 between the front wall 9 of the piston 104 and the nozzle 112, including the hollow portion 12 and the hemispherical chamber 111 of the nail 113. The build material is preferably provided to the reservoir 16 in the form of a stick 115. The piston 104 is adapted to apply pressure to the build material stick 115 in the reservoir 16 to extrude the build material through the nozzle 112 when the piston 104 is advanced in the cylinder 6 and to apply suction to the build material stick 115 to withdraw the build material into the nozzle 112 when the piston 104 is retracted in the cylinder 6.

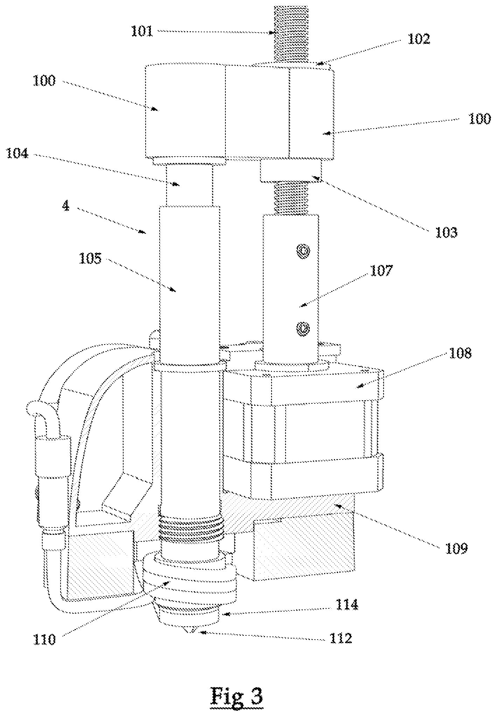

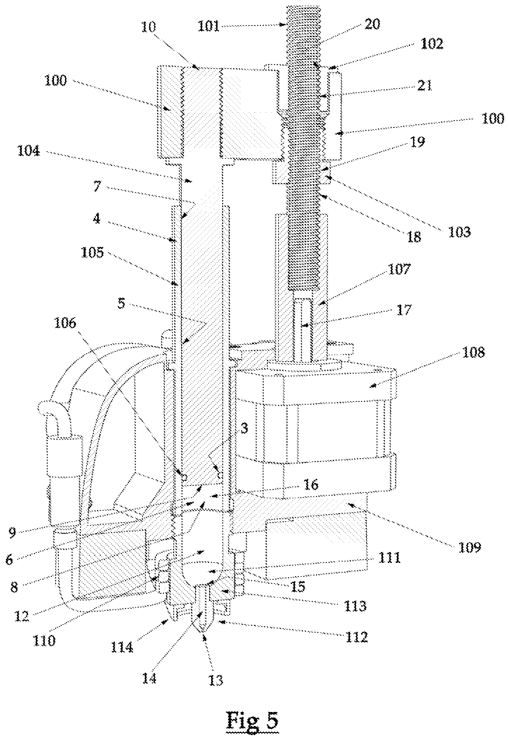

A motor 108 (FIGS. 3, 5) is connected to the piston 104 to advance and retract the piston 104 in the cylinder 6. The motor 108 may be, for example, a MakerBot Replicator 2/2X NEMA 17 Hybrid Stepper Motor. The motor 108 and barrel 105 are mounted on a supporting upper chassis 109. The chassis may be made of any suitable metal or plastic material. Alternatively, the chassis may be 3D printed from PLA build material. The motor 108 is preferably a stepper motor. The motor 108 may be connected to the piston via a linkage 100 and drive rod 101. The linkage is made from aluminum or another suitable metal or plastic material, or may be 3D printed from PLA build material. The drive rod is preferably made from steel for durability. The drive rod 101 is connected to a spindle 17 of the motor 108 by a sleeve-like connector 107. The drive rod 101 is connected to the motor 108 such that rotational movement of the spindle 17 of the motor 108 is transmitted directly to the drive rod 101. The drive rod has external threads 18. A drive nut 103 is fixedly secured to the linkage 100. The drive nut 103 has internal threads 19 that cooperatively engage the external threads 18 of the drive rod 101. Rotation of the drive rod 101 in the drive nut 103 translates rotational movement of the motor into linear movement of the linkage 100 which in turn moves the piston 104 linearly in the cylinder 6. When the motor spindle rotates in a first direction, the rotational movement of the rod is translated into linear movement of the drive nut and linkage, and in turn the piston such that the piston advances in the cylinder (moving the front wall of the piston away from the first end of the cylinder towards the second end of the cylinder). When the motor rotates in the opposite direction, the piston is retracted in the cylinder (the front wall of the piston moves away from the second end of the cylinder). A handle 119 is provided on the drive rod 101 so that the piston can be advanced or retracted manually by turning the drive rod.

Preferably, a rod bearing 102 is secured to the linkage 100. At least a portion of the drive rod 101 passes through a bore 20 in the rod bearing 102. The bore 20 of the rod bearing 102 may have internal threads 21 that cooperatively engage the external threads 18 of the drive rod 101. Alternatively, the bore may have a smooth wall (not shown). The rod bearing is positioned and adapted to secure the alignment of the drive rod 101 and linkage 100 with respect to the other parts of the extruder structure and components. The drive nut and rod bearing are made from any suitable metal or plastic material. In the present case, the drive nut and rod bearing are made from brass.

A build plate 123 (FIGS. 1, 2, 7 and 8) is located below the nozzle 112.

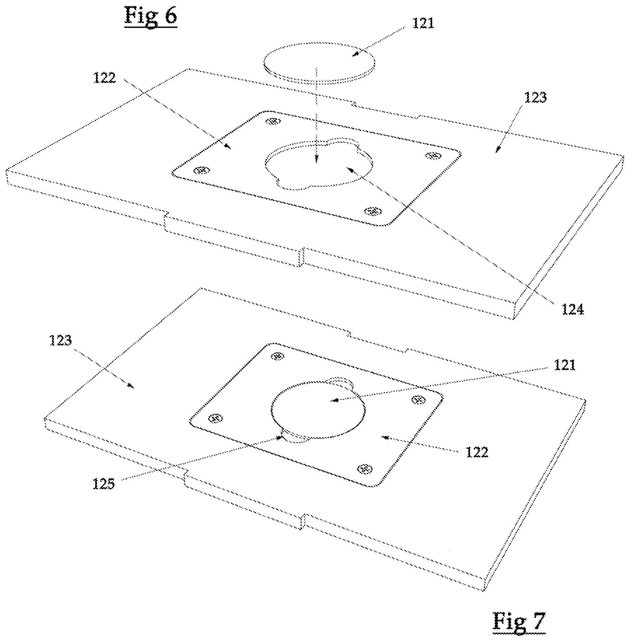

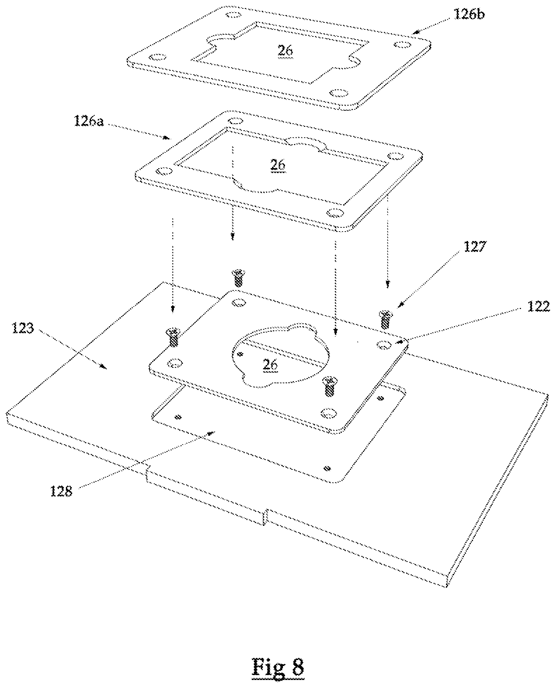

A substrate 121 for supporting the cosmetic article is removably secured on the build plate 123 between the build plate 123 and the nozzle 112 to receive the build material from the nozzle 112. The substrate may be 3D printed from PLA build material, or may be any other suitable metal or plastic material that is cosmetic formula compatible. Preferably, the build plate 123 has a substrate recess 124 cooperatively shaped to securely receive and position the substrate 121 through the printing process. The substrate recess 124 securely holds the substrate 121 in place during the printing operation. Preferably, a build plate 123 of a modular design is provided allowing substrates having different shapes, thicknesses and sizes to be inserted and held by the build plate with little or no re-tooling or modification of build plate 123. As illustrated in FIGS. 6, 7 and 8, a sizing recess 128 may be provided that is dimensioned larger than the substrate 121 to accommodate a sizing insert 122, 126a, 126b. The device 2 may be used to 3D print cosmetic articles of varying size and type. For example, the device 2 may be used to 3D print lipstick, lip balm, eye shadow, eyebrow color, cheek makeup, moisturizers or deodorant in stick or bullet form, or foundation or color makeup in cake form (for inserting in compacts), each requiring a substrate 121 of a different shape and/or dimension. A sizing insert 122, 126a, 126b may be provided for each substrate shape and/or dimension required to vary the size of the substrate recess 124 as needed (see, for example, sizing inserts 122, 126a and 126b in FIG. 8). Each sizing insert 122, 126a, 126b has a substrate void 26 (corresponding to the substrate recess 124 discussed above). The substrate void 26 is cooperatively shaped and dimensioned to receive a correspondingly shaped and dimensioned substrate 121. The substrate void 26 securely holds the substrate 121 in place in the sizing insert, which in turn is secured to the build plate, during the printing operation. Screws 127 may be provided to secure the sizing insert 122, 126a, 126b to the build plate 123. With the sizing insert 122, 126a, 126b provided in the insert recess 128, the substrate recess 124 is defined by the substrate void 26 in the sizing insert 126. An additional clearance 125 may be provided in the insert to facilitate removal of the substrate 121 including the 3D printed article after the printing process has completed. The insert system simplifies and expedites change-over of the substrate holding platform. The insert system provides an advantage over specialized, machined build pates for each different substrate size or shape. The inserts may be 3D printed or otherwise inexpensively manufactured to speed development and fabrication and allow shipping of a simple, light part, rather than an entire, larger build plate. Inserts can be made faster than a full build plate. The insert system allows faster adjustment for variable substrate thicknesses.

The positioning assembly 27 is provided to position the nozzle 112 relative to the build plate 123 in horizontal and vertical directions.

A controller 28 is coupled in a communicating relationship with the extruder 4 and the positioning assembly 27 via the wiring sheath 135. The controller 28 is programmed to position the nozzle relative to the build plate and to advance or retract the build material stick 115, such that build material is selectively advanced through the nozzle 112 to be deposited onto the substrate to fabricate the cosmetic article in a three dimensional shape.

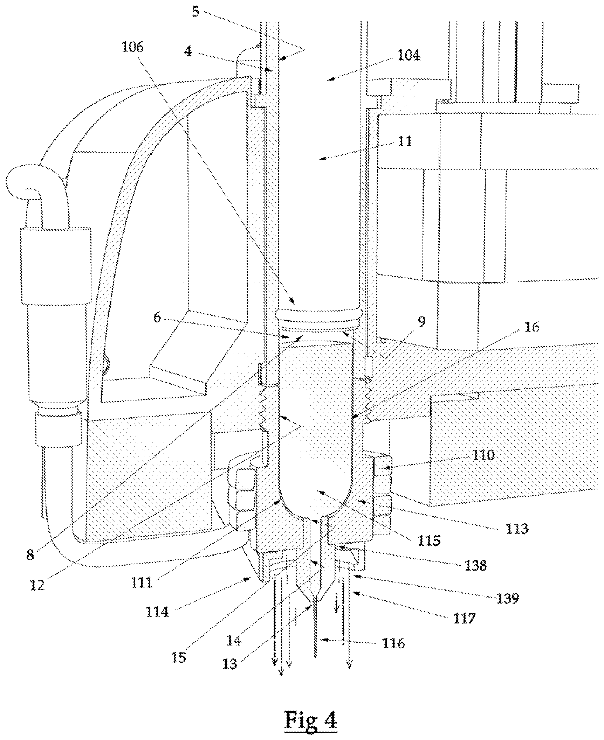

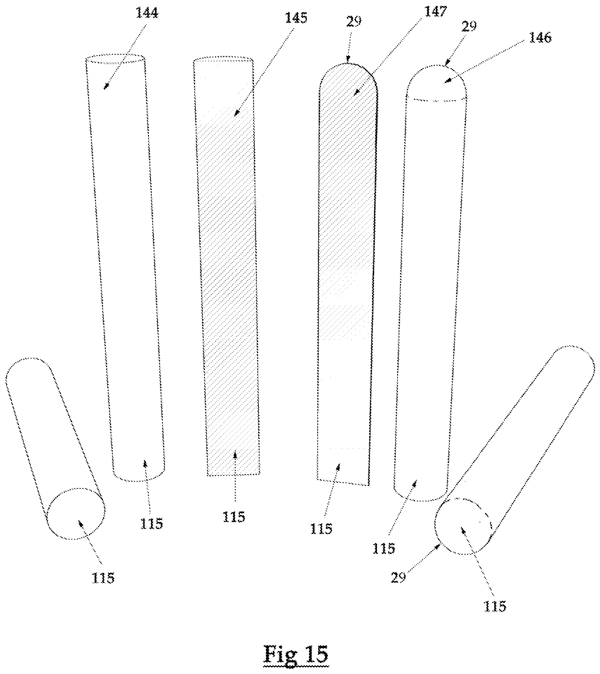

Preferably, the build material comprises the pre-formed stick 115 (shown partially extruded through the nozzle 112 in FIG. 4, and in FIG.15 at reference numbers 144 -147). An example of a build material formula is:

| ***Material*** | ***Approx %*** | |
|---|---|---|
| Castor Oil | 15.0 | |
| Caprylic/Capric Triglycerides | 3.0 | |
| Camuba Wax | 3.0 | |
| Long Chain Alcohol | 20.0 | Preferably, alcohols greater than 5 methyl/methylene units |
| Long Chain Ester | 9.0 | |
| Citrate Ester | 10.0 | |
| Paraffin Wax | 10.0 | |
| Silicone | 5.0 | |
| Pigments | 10.0 | |
| Pearls | 5.0 | |
| Texture/Aesthetic/Optical Powders | 10.0 | Preferably, silicas, polyurethanes, PMMA, PSQ, etc. |

The pre-formed build material stick 115 preferably has a width in a range from 0.125 inches (0.3 cm) to 3 inches (7.6 cm) and a length in a range from 0.5 inches (1.3 cm) to 12 inches (30.5 cm). The preferred stick is round in cross-section with a diameter of 0.5 inches (1.3 cm) and a length of 4 inches (10.2 cm). In determining the dimensions of the stick the forces required to drive, advance, retract and extrude build material in stick form must be taken into consideration. Accordingly, the dimensions will necessarily change depending on the formula and constitution of the build material. It has been found that sticks in the range of sizes above are compatible with the operations of the device disclosed herein, including the torque produced by the stepper motor 108. As the entire print mechanism moves in sudden, reciprocating motions, keeping the mass of moving parts (e.g., the extruder and related parts) to a minimum is of prime concern. For example, an extruder dimensioned to accommodate larger sticks of build material will in turn have larger mechanical components and require more torque to drive and thus heavier motors. The relatively smaller size of the preferred stick of build material, 0.5 inches (1.3 cm) wide by 4 inches (10.2 cm) long, is suitable for use with existing hardware and software that are optimized for plastic filament feedstock (e.g., the MakerBot printer). This preferred size allows for modification of existing 3D printer hardware and software to allow printing of a cosmetic build material. Cosmetics such as, for example, lipstick, are generally fragile. Accordingly, the preferred size is suitable to provide the required strength, rigidity, degree of compressibility and a reasonable bulk required for practical printing applications. The preferred size also makes the sticks practical to handle, load, and store, especially for consumers or beauty advisors. In addition, the preferred size of the stick is close to the size of known lipstick bullets, so the same machinery and facilities can be used to cast the build material sticks.

Sticks can be molded with one end in a hemispherical shape 29 (see FIG. 15) to assist insertion and speed starting each print cycle. The hemispherical shaped end would preferably match the shape of the hemispherical chamber 111 in the nail 113.

A heating element 110, illustrated as a coil, is secured proximal to the nozzle 112. The heating element 110 is positioned and adapted to melt the build material 115 prior to extrusion from the nozzle 112. As illustrated, the heating element 110 surrounds a portion of the nail 113 adjacent to the nozzle. Heat is provided by the heating element to the nail in the vicinity of the hemispherical chamber 111. The hemispherical chamber 111 thus becomes a heating chamber for the build material. Preferably, melting of the solid or semi-solid build material is restricted to a portion of the reservoir in the nail 113, i.e., to the hemispherical chamber 111 and the nozzle 112. Restricting the amount of build material 115 that is melted at any given time prevents excess melted build material from escaping through the nozzle via gravity. By restricting the amount of build material melted at any given time, greater control and precision is provided to the extrusion process. To facilitate the restriction of melting of the build material, the barrel 105 is made from a polycarbonate plastic material that has a low thermal conductivity. Preferably, the barrel 105 is made from a plastic material that is non-heat conductive or very low heat conductive. Preferably, the material of the barrel 105 has a thermal conductivity that is less than 3 Btu/(ft h oF) (18.7 kJ / m hour °C).

When the piston 104 advances in the cylinder 6, the build material 115 in the form of a stick is pushed from the reservoir 16 into the hemispherical chamber 111 of the nail 113, where it is heated and melted. The melted build material is pushed into the nozzle inlet 15, through the nozzle duct 14 and extruded out through the nozzle outlet 13 as a bead 116 of build material. The portion of the stick 115 that is still in the cylinder 6 does not melt because the barrel 105 is made of a material having a low thermal conductivity. The heat applied to the nail 113 and in turn to the hemispherical chamber 111, is not transferred to the barrel 105 or the build material remaining in the cylinder 6. When the piston 104 is retracted in the cylinder 6, suction is exerted on the build material 115, particularly if the build material is in solid or semi-solid stick form. This suction is in turn exerted on the liquefied build material in the hemispherical chamber 111 and the nozzle 112. Accordingly, the liquefied build material retracts sufficiently into the nozzle outlet 13 so that no excess build material drips or is applied to the article 25 being printed. As with conventional 3D printing software, the controller 28 is programmed to create a build material retraction action during normal operations to prevent droplets of melted build material from continuing to be extruded during non-printing toolpath or print head assembly motions. The O-ring seal 106 between the inner wall 5 of the barrel 105 and the piston 104 creates a partial vacuum inside the reservoir during piston retraction, thus retracting the build material along with the piston. This is preferred to effect accurate printing actions. The vacuum of the piston retraction eliminates the need to secure the build material to the piston mechanically, or to secure the build material in the reservoir mechanically (e.g., by a valve).

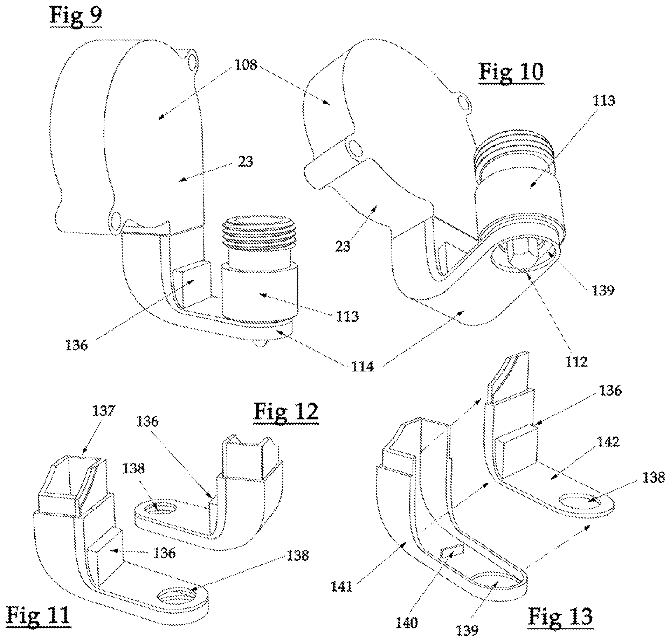

An important aspect of the invention is providing proper cooling profiles to the build material after it has been extruded and fused onto the article being printed. Accordingly, an annular airflow (indicated by downwardly directed arrows at 117 in FIG. 4) is provided around a circumference of the cosmetic article being printed to cool, fuse and harden the build material after the build material is extruded and deposited on the article. The means for cooling includes a fan 118, such as, for example, a Shark Parts 100706 Blower Fan for MakerBot Replicator 2. The fan 118 is in fluid communication with an air intake 22, a duct 114 and an air outlet 139. The fan conducts air from the intake 22 through the duct 114 to the outlet 139. The duct may be formed in two parts, bottom half 141 and top half 142. The duct parts may be made from a suitable plastic or other material by any known methods. Alternatively, the duct parts may be 3D printed from PLA build material. The duct 114 comprises a flange 137 (see FIGS. 9-13) to secure the duct to the fan housing 23. At a lower end of the duct 114, a top opening 138 is provided for insertion of the nozzle 112 through the duct 114. Opposite the top opening 138 is a bottom opening or outlet 139. The nozzle 112 projects through the top opening 138 and outlet 139 such that it is exposed below the duct 114. The body of the nail 113 substantially covers and closes the top opening 138. In contrast and as best illustrated in FIG. 10, the outlet 139 is substantially larger in diameter than the nozzle 112. Accordingly, air forced through the duct easily passes through the gap between the nozzle 112 and the perimeter of the outlet 139.

The outlet 139 is shaped and adapted to direct the air annularly and downwardly around the circumference of the article being printed (see arrows indicated at 117 in FIG. 4). Preferably, the outlet 139 has a circular configuration and is positioned coaxially around the nozzle 112 as described above and illustrated in FIG. 10. In this way, the annular airflow 117 coming from the outlet 139 is directed downwardly around the periphery of the article (not shown) being printed. In order to ensure an annular airflow from the circular duct, at least one internal baffle 140 is provided in the duct to create a uniform outflow from the air outlet 139.

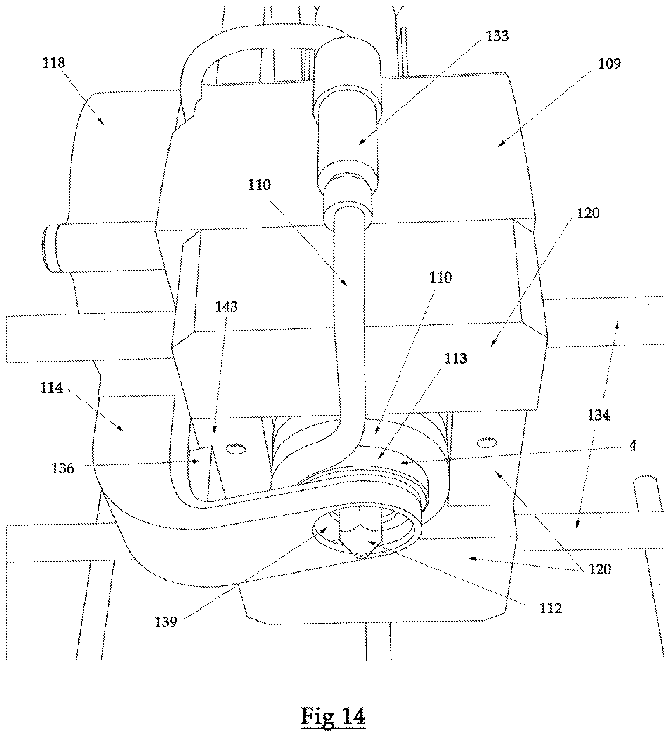

To stabilize the duct with respect to the nozzle 112, a duct support 136 is provided on the duct 114. The duct support 136 presses against a bottom 143 of the lower chassis 120 (see FIG. 14). The duct support 136 stabilizes the duct 114 and the fan 118 with respect to the other components of the extruder structure.

The substrate 121 on which the article is printed may become an integral part of the article printed. It supports the article when the article is removed from the build plate and may continue to support the article when the article is secured in a primary package such as, for example, a lipstick case or a cosmetic compact. The substrate can be in the form of a flat plate as illustrated, or alternatively, may be a cup or a pan (not shown), such as a cup that holds a lipstick bullet in a lipstick riser mechanism, or such as a pan that holds a cake of color cosmetic in a compact. The substrate 121 may be made of any suitable material, such as, for example, paper, foil, plastic sheet, paperboard, molded plastic piece, metal, etc.

To further enhance the cooling capability of the device, the fan is a variable speed fan, and the device has a switch 24 for selecting a speed of the variable speed fan to adjust the rate of cooling of the article being printed. For example, the fan speed may be selectively adjusted for printing an article with a specific part geometry or part size requiring less or more cooling air. The fan speed may be adjusted for printing a build material having a formula requiring less or more cooling air. Sensors (not shown) may be provided to the device to automatically adjust temperatures for a particular formula, size, geometry, etc.

The device as claimed provides at least the following advantages. The device permits printing of build materials with glass-transition temperature ranges significantly wider than polymers that are typically used in 3D printing or fused deposition modeling (FDM) printing. Traditional polymers such as ABS, Nylon, PET and PLA used in traditional 3D or FDM printing are selected and formulated precisely for their ability to melt and solidify quickly and predictably due to sharply-defined glass transition temperatures. In contrast, cosmetic products typically have, for example, waxes, oils, silicones and other ingredients that give a build material that includes a cosmetic formula a much wider glass transition temperature or even multiple glass transition temperatures. Some of these build materials are comprised mostly of solid waxes and liquid oils which form a structure called a wax-oil gel. The device as claimed allows wax-oil gels to be printed at temperatures lower than the drop point and standard processing temperatures. Lower-temperature 3D or FDM printing of cosmetic materials allows a higher degree of print accuracy as the material is not fully liquefied, which it would be at a standard processing temperature. The print-useful glass transition range typically spans 10° C for typical 3D or FDM printing polymer build materials. In contrast, the print-useful glass transition range for cosmetic formula based build materials, including, for example, wax-oil gels, typically spans over 20° C.

Traditional polymers such as ABS, Nylon, PET and PLA used in traditional 3D or FDM printing are selected and formulated precisely for their ability to melt and solidify quickly and predictably. This is necessary as those materials are formed as filament feedstock and fed into the melting zone as a continuous strand. While filament feedstock systems have practical advantages, their feedstock drive mechanisms require the feedstock to be rigid and hard in order to advance the strand by applying frictional force to the sides of the filament feedstock. In contrast, cosmetic based build materials such as lipstick and other relatively soft cosmetic materials are too malleable to print effectively as filament feedstock. The piston drive extruder of the present device, particularly when used with a pre-formed stick of build material to enhance the advance and retract fuction of the system, solves the problem of feeding cosmetic based build materials for fusion deposition modeling. The piston extruder provides a new and unique method for feeding cosmetic based build material to 3D print a cosmetic article. The device also distinguishes over systems already developed for chocolate and other consumables wherein the build material is fully-melted in the reservoir. In the present invention the piston, particularly when used with pre-formed stick of cosmetic build material, precisely controls back-and-forth motion of the build material in the nozzle. The precise back and forth motion of the build material in the nozzle is required to create accurate prints and avoid excess material extrusion. Accordingly, the device is more accurate than a system with a fully-melted build material.

Also, as the feedstock may remain solid until the point of extrusion, heavier formula ingredients do not separate out within the reservoir as they can do in fully-melted feed systems. This is critical for cosmetic products where dense minerals may be critical components of the formulas, and premature formula separation is often a problem.

It is understood that various modifications and changes in the specific form and construction of the various parts can be made without departing from the scope of the following claims.

## Claims

1. A device for printing a three dimensional cosmetic article from a build material comprising a cosmetic formula, the device comprising:
an extruder (4) including:
a barrel (105) having an inner wall (5) defining a cylinder (6), the cylinder having a first end (7) and a second end (8);
a piston (104) mounted in the first end (7) of the cylinder (6) such that the piston is able to advance and retract in the cylinder, the piston (104) having a front wall (9) and a rear wall (10) connected by an outwardly directed sidewall (11), the sidewall shaped and dimensioned to fit closely in the cylinder (6), the front wall (9) of the piston (104) directed toward the second end (8) of the cylinder (6);
an extrusion nozzle (112) secured to the second end (8) of the cylinder (6);
a reservoir (16) for receiving a quantity of the build material in the form of a pre-formed stick, the reservoir (16) defined by a portion of the cylinder (6) between the front wall (9) of the piston (104) and the nozzle (112), the piston (104) adapted to apply pressure to the build material to extrude the build material through the nozzle (112) when the piston is advanced in the cylinder (6) and to apply suction to the build material to withdraw the build material into the nozzle when the piston is retracted in the cylinder (6); and
a motor (108) connected to the piston (104) to advance and retract the piston (104);
a build plate (123) located below the nozzle (112);
a substrate (121) for supporting the cosmetic article, the substrate removably secured on the build plate (123) between the build plate and the nozzle to receive the build material from the nozzle;
a positioning assembly (27) that positions the nozzle (112) relative to the build plate (123); and
a controller (28) coupled in a communicating relationship with the extruder (4) and the positioning assembly (27), the controller (28) programmed to position the nozzle (112) relative to the build plate (123) and to advance or retract the build material, such that build material is selectively advanced through the nozzle (112) to be deposited onto the substrate (121) to fabricate the cosmetic article in a three dimensional shape,
**characterised in that**:
the nozzle (112) further comprises a hemispherical chamber (111) for receiving build material, in the form of a pre-formed stick with one end in a hemispherical shape (29), from the reservoir (16) prior to extrusion, wherein the hemispherical chamber (111) is a melting chamber.

2. The device of claim 1 wherein the pre-formed stick of build material has a width in the range of 0.125 inches (0.3 cm) to 3 inches (7.6 cm) and a length in the range of 0.5 inches (1.3 cm) to 12 inches (30.5 cm); preferably wherein the stick has a round cross-section, a width of 0.5 inches (1.3 cm) and a length of 4 inches (10.2 cm).

3. The device of claim 1 further comprising a linkage (100) connecting the piston (104) to a drive rod (101) having external threads (18), the drive rod (101) connected to a spindle (17) of the motor (108); and
further comprising a drive nut (103) fixedly secured to the linkage (100), the drive nut having internal threads (19) cooperatively engaging the external threads (18) of the drive rod (101); and
further comprising a rod bearing (102) secured to the linkage (100) and receiving at least a portion of the drive rod (101), the rod bearing (102) adapted to secure the alignment of the drive rod (101) with respect to the piston (104), preferably wherein the motor (108) is a stepper motor.

4. The device of claim 1 further comprising a seal (106) between the sidewall (11) of the piston (104) and the inner wall (5) of the cylinder (6), wherein the seal is an elastomeric O-ring.

5. The device of claim 1 further comprising a heating element (110) secured proximal to the nozzle (112), the heating element (110) adapted to melt the build material prior to extrusion from the nozzle (112).

6. The device of claim 1 further comprising means for providing an annular airflow around a circumference of the cosmetic article being printed to cool the build material, fuse the build material to surrounding build material and harden the build material, after the build material is deposited.

7. The device of claim 6, wherein the means for providing an annular airflow includes a fan (118) in fluid communication with an air intake (22), a duct (114) and an air outlet (139), the fan (118) conducting air from the intake (22) through the duct (114) to the outlet (139), the outlet (139) adapted to direct the air annularly around the circumference of the article being printed, preferably wherein the outlet (139) has a circular configuration and is positioned coaxially around the nozzle (112).

8. The device of claim 7 wherein the duct (114) further comprise internal baffles (140) adapted to create a uniform outflow from the air outlet (139).

9. The device of claim 7 or 8 wherein the fan (118) is a variable speed fan, and the device further comprises a switch (24) for selecting a speed of the fan to adjust the rate of cooling of the article being printed.

10. The device of claim 1 wherein the barrel (105) is made from a material that has a thermal conductivity less than 3 Btu/(ft h °F) (18.7 kJ / m hour °C).

11. The device of claim 1 wherein the substrate (121) is selected from one of a plate, a cup and a pan; and/or
wherein the build plate (123) further comprises a substrate recess (124) cooperatively shaped to receive the substrate (121).

12. The device of any of claims 1 to 10 further comprising a sizing recess (128) in the build plate (123), the sizing recess (128) shaped and dimensioned to be larger than the substrate (121), the sizing recess (128) shaped and dimensioned to receive a correspondingly shaped and dimensioned sizing insert (122), the insert secured to the build plate (123), the insert (122) having a substrate void (26) cooperatively shaped and dimensioned to receive a correspondingly shaped and dimensioned substrate (121).

13. The device of any preceding claim, further comprising a nail (113) secured to the second end (8) of the cylinder (6), the nail (113) defining the hemispherical chamber (111) in fluid communication with the cylinder (6),
wherein the extrusion nozzle (112) is secured to the nail (113), the extrusion nozzle (112) having a nozzle outlet (13) at a distal end and a nozzle inlet (15) at a proximal end, the hemispherical chamber (111) in fluid communication with the nozzle inlet (15) and the nozzle inlet (15) in fluid communication with the nozzle outlet (13) via a nozzle duct (14); and
wherein the reservoir (16) is defined by the portion of the cylinder (6) between the front wall (9) of the piston (104) and the hemispherical chamber (111) of the nail (113), the piston (104) adapted to apply pressure to the build material to advance the build material from the reservoir (16) into the hemispherical chamber (111) and extrude the build material through the nozzle outlet (13) when the piston (104) is advanced in the cylinder (6) and to apply suction to the build material to withdraw the build material into the nozzle outlet (13) when the piston (104) is retracted in the cylinder (6), the controller (28) programmed to advance the build material through the nozzle (112) to deposit the build material onto the substrate (121) to fabricate the cosmetic article in a three dimensional shape.

14. The device of any preceding claim, wherein the cosmetic composition comprises wax and/or oil.

## Patentansprüche

1. Vorrichtung zum Drucken eines dreidimensionalen kosmetischen Artikels aus einem Baumaterial, umfassend eine kosmetische Formel, die Vorrichtung umfassend:
einen Extruder (4), einschließlich:
einer Trommel (105), die eine Innenwand (5) aufweist, die einen Zylinder (6) definiert, wobei der Zylinder ein erstes Ende (7) und ein zweites Ende (8) aufweist;
eines Kolbens (104), der in dem ersten Ende (7) des Zylinders (6) derart montiert ist, dass der Kolben sich in dem Zylinder vorwärtsbewegen und zurückziehen kann, wobei der Kolben (104) eine Vorderwand (9) und eine Rückwand (10) aufweist, die durch eine nach außen gerichtete Seitenwand (11) verbunden sind, wobei die Seitenwand geformt und bemessen ist, um eng in den Zylinder (6) zu passen, wobei die Vorderwand (9) des Kolbens (104) zu dem zweiten Ende (8) des Zylinders (6) hin gerichtet ist;
einer Extrusionsdüse (112), die an dem zweiten Ende (8) des Zylinders (6) befestigt ist;
eines Behälters (16) zum Aufnehmen einer Menge des Baumaterials in der Form eines vorgeformten Stifts, wobei der Behälter (16) durch einen Abschnitt des Zylinders (6) zwischen der Vorderwand (9) des Kolbens (104) und der Düse (112) definiert ist, wobei der Kolben (104) angepasst ist, um Druck auf das Baumaterial auszuüben, um das Baumaterial durch die Düse (112) zu extrudieren, wenn der Kolben in dem Zylinder (6) vorwärtsbewegt wird, und um ein Ansaugen auf das Baumaterial auszuüben, um das Baumaterial in die Düse zu entziehen, wenn der Kolben in den Zylinder (6) zurückgezogen wird; und
eines Motors (108), der mit dem Kolben (104) verbunden ist, um den Kolben (104) vorwärtszubewegen und zurückzuziehen;
eine Bauplatte (123), die sich unterhalb der Düse (112) befindet;
ein Substrat (121) zum Tragen des kosmetischen Artikels, wobei das Substrat auf der Bauplatte (123) zwischen der Bauplatte und der Düse abnehmbar befestigt ist, um das Baumaterial von der Düse aufzunehmen;
eine Positionierungsanordnung (27), die die Düse (112) relativ zu der Bauplatte (123) positioniert; und
eine Steuerung (28), die in einer kommunizierenden Beziehung mit dem Extruder (4) und der Positionierungsanordnung (27) gekoppelt ist, wobei die Steuerung (28) programmiert ist, um die Düse (112) relativ zu der Bauplatte (123) zu positionieren und um das Baumaterial derart vorwärtszubewegen oder zurückzuziehen, dass das Baumaterial durch die Düse (112) selektiv vorwärtsbewegt wird, um auf das Substrat (121) abgeschieden zu werden, um den kosmetischen Artikel in einer dreidimensionalen Form zu fertigen,
**dadurch gekennzeichnet, dass:**
die Düse (112) ferner eine Halbkugelkammer (111) zum Aufnehmen von Baumaterial in der Form eines vorgeformten Stifts mit einem Ende in einer Halbkugelform (29) aus dem Behälter (16) vor einer Extrusion umfasst, wobei die Halbkugelkammer (111) eine Schmelzkammer ist.

2. Vorrichtung nach Anspruch 1, wobei der vorgeformte Stift aus Baumaterial eine Breite in dem Bereich von 0,125 Zoll (0,3 cm) bis 3 Zoll (7,6 cm) und eine Länge in dem Bereich von 0,5 Zoll (1,3 cm) bis 12 Zoll (30,5 cm) aufweist; vorzugsweise wobei der Stift einen runden Querschnitt, eine Breite von 0,5 Zoll (1,3 cm) und eine Länge von 4 Zoll (10,2 cm) aufweist.

3. Vorrichtung nach Anspruch 1, ferner umfassend ein Gestänge (100), das den Kolben (104) mit einer Antriebsstange (101), die Außengewinde (18) aufweist, verbindet, wobei die Antriebsstange (101) mit einer Spindel (17) des Motors (108) verbunden ist; und
ferner umfassend eine Antriebsmutter (103), die an dem Gestänge (100) fest befestigt ist, wobei die Antriebsmutter Innengewinde (19) aufweist, die die Außengewinde (18) der Antriebsstange (101) zusammenwirkend in Eingriff nehmen; und
ferner umfassend ein Stangenlager (102), das an dem Gestänge (100) befestigt ist und das mindestens einen Abschnitt der Antriebsstange (101) aufnimmt, wobei das Stangenlager (102) angepasst ist, um die Ausrichtung der Antriebsstange (101) in Bezug auf den Kolben (104) zu befestigen, vorzugsweise wobei der Motor (108) ein Schrittmotor ist.

4. Vorrichtung nach Anspruch 1, ferner umfassend eine Dichtung (106) zwischen der Seitenwand (11) des Kolbens (104) und der Innenwand (5) des Zylinders (6), wobei die Dichtung ein elastomerer O-Ring ist.

5. Vorrichtung nach Anspruch 1, ferner umfassend ein Wärmeelement (110), das an der Düse (112) proximal befestigt ist, wobei das Wärmeelement (110) angepasst ist, um das Baumaterial vor der Extrusion aus der Düse (112) zu schmelzen.

6. Vorrichtung nach Anspruch 1, ferner umfassend Mittel zum Bereitstellen eines ringförmigen Luftstroms um einen Umfang des kosmetischen Artikels herum, der gedruckt wird, um das Baumaterial zu kühlen, das Baumaterial zu umgebendem Baumaterial zu verschmelzen und das Baumaterial zu härten, nachdem das Baumaterial abgeschieden wird.

7. Vorrichtung nach Anspruch 6, wobei das Mittel zum Bereitstellen eines ringförmigen Luftstroms ein Gebläse (118) in Fluidverbindung mit einem Lufteinlass (22), einem Kanal (114) und einem Luftauslass (139) einschließt, wobei das Gebläse (118) Luft von dem Einlass (22) durch den Kanal (114) zu dem Auslass (139) leitet, wobei der Auslass (139) angepasst ist, um die Luft um den Umfang des Artikels herum, der gedruckt wird, ringförmig zu richten, vorzugsweise wobei der Auslass (139) eine kreisförmige Konfiguration aufweist und um die Düse (112) herum koaxial positioniert ist.

8. Vorrichtung nach Anspruch 7, wobei der Kanal (114) ferner innere Leitbleche (140) umfasst, die angepasst sind, um einen gleichmäßigen Abfluss von dem Luftauslass (139) zu erzeugen.

9. Vorrichtung nach Anspruch 7 oder 8, wobei das Gebläse (118) ein Gebläse mit variabler Geschwindigkeit ist und die Vorrichtung ferner einen Schalter (24) zum Auswählen einer Geschwindigkeit des Gebläses umfasst, um die Abkühlrate des Artikels, der gedruckt wird, einzustellen.

10. Vorrichtung nach Anspruch 1, wobei die Trommel (105) aus einem Material hergestellt ist, das eine thermische Leitfähigkeit von weniger als 3 Btu/(ft h °F) (18,7 kJ/m Stunde °C) aufweist.

11. Vorrichtung nach Anspruch 1, wobei das Substrat (121) aus einer Platte, einem Becher und einem Teller ausgewählt ist; und/oder
wobei die Bauplatte (123) ferner eine Substrataussparung (124) umfasst, die zusammenwirkend geformt ist, um das Substrat (121) aufzunehmen.

12. Vorrichtung nach einem der Ansprüche 1 bis 10, ferner umfassend eine Leimungsaussparung (128) in der Bauplatte (123), wobei die Leimungsaussparung (128) geformt und bemessen ist, um größer als das Substrat (121) zu sein, wobei die Leimungsaussparung (128) geformt und bemessen ist, um einen entsprechend geformten und bemessenen Leimeinsatz (122) aufzunehmen, wobei der Einsatz an der Bauplatte (123) befestigt ist, wobei der Einsatz (122) einen Substrathohlraum (26) aufweist, der zusammenwirkend geformt und bemessen ist, um ein entsprechend geformtes und bemessenes Substrat (121) aufzunehmen.

13. Vorrichtung nach einem der vorstehenden Ansprüche, ferner umfassend einen Nagel (113), der an dem zweiten Ende (8) des Zylinders (6) befestigt ist, wobei der Nagel (113) die Halbkugelkammer (111) in Fluidverbindung mit dem Zylinder (6) definiert,
wobei die Extrusionsdüse (112) an dem Nagel (113) befestigt ist, wobei die Extrusionsdüse (112) einen Düsenauslass (13) an einem distalen Ende und einen Düseneinlass (15) an einem proximalen Ende aufweist, wobei die Halbkugelkammer (111) mit dem Düseneinlass (15) in Fluidverbindung steht und der Düseneinlass (15) über einen Düsenkanal (14) mit dem Düsenauslass (13) in Fluidverbindung steht; und
wobei der Behälter (16) durch den Abschnitt des Zylinders (6) zwischen der Vorderwand (9) des Kolbens (104) und der Halbkugelkammer (111) des Nagels (113) definiert ist, wobei der Kolben (104) angepasst ist, um Druck auf das Baumaterial auszuüben, um das Baumaterial aus dem Behälter (16) in die Halbkugelkammer (111) vorwärtszubewegen und das Baumaterial durch den Düsenauslass (13) zu extrudieren, wenn der Kolben (104) in dem Zylinder (6) vorwärtsbewegt wird, und um das Ansaugen auf das Baumaterial auszuüben, um das Baumaterial in den Düsenauslass (13) zu entziehen, wenn der Kolben (104) in den Zylinder (6) zurückgezogen wird, wobei die Steuerung (28) programmiert ist, um das Baumaterial durch die Düse (112) vorwärtszubewegen, um das Baumaterial auf das Substrat (121) abzuscheiden, um den kosmetischen Artikel in einer dreidimensionalen Form zu fertigen.

14. Vorrichtung nach einem der vorstehenden Ansprüche, wobei die kosmetische Zusammensetzung Wachs und/oder Öl umfasst.

## Revendications

1. Dispositif d'impression d'un article cosmétique tridimensionnel à partir d'un matériau de construction comprenant une formule cosmétique, le dispositif comprenant :
une extrudeuse (4) comprenant :
un tube (105) ayant une paroi intérieure (5) définissant un cylindre (6), le cylindre ayant une première extrémité (7) et une seconde extrémité (8) ;
un piston (104) monté dans la première extrémité (7) du cylindre (6) de telle sorte que le piston est capable d'avancer et de se rétracter dans le cylindre, le piston (104) ayant une paroi avant (9) et une paroi arrière (10) reliées par une paroi latérale dirigée vers l'extérieur (11), la paroi latérale étant formée et dimensionnée pour s'adapter étroitement dans le cylindre (6), la paroi avant (9) du piston (104) étant dirigée vers la seconde extrémité (8) du cylindre (6) ;
une buse d'extrusion (112) fixée à la seconde extrémité (8) du cylindre (6) ;
un réservoir (16) pour recevoir une quantité du matériau de construction sous la forme d'un bâton préformé, le réservoir (16) étant défini par une partie du cylindre (6) entre la paroi avant (9) du piston (104) et la buse (112), le piston (104) étant conçu pour appliquer une pression au matériau de construction pour extruder le matériau de construction à travers la buse (112) lorsque le piston est avancé dans le cylindre (6) et pour appliquer une aspiration au niveau du matériau de construction pour retirer le matériau de construction dans la buse lorsque le piston est rétracté dans le cylindre (6) ; et
un moteur (108) relié au piston (104) pour faire avancer et rétracter le piston (104) ;
une plaque de construction (123) située sous la buse (112) ;
un substrat (121) pour supporter l'article cosmétique, le substrat étant fixé de manière amovible sur la plaque de construction (123) entre la plaque de construction et la buse pour recevoir le matériau de construction à partir de la buse ;
un ensemble de positionnement (27) qui positionne la buse (112) par rapport à la plaque de construction (123) ; et
un dispositif de commande (28) couplé en communication avec l'extrudeuse (4) et l'ensemble de positionnement (27), le dispositif de commande (28) étant programmé pour positionner la buse (112) par rapport à la plaque de construction (123) et pour faire avancer ou rétracter le matériau de construction, de telle sorte que le matériau de construction est avancé sélectivement à travers la buse (112) pour être déposé sur le substrat (121) afin de fabriquer l'article cosmétique en une forme tridimensionnelle,
**caractérisé en ce que** :
la buse (112) comprend en outre une chambre hémisphérique (111) pour recevoir un matériau de construction, sous la forme d'un bâton préformé avec une extrémité dans une forme hémisphérique (29), à partir du réservoir (16) avant l'extrusion, la chambre hémisphérique (111) étant une chambre de fusion.

2. Dispositif selon la revendication 1, dans lequel le bâton préformé de matériau de construction a une largeur dans la plage de 0,125 pouce (0,3 cm) à 3 pouces (7,6 cm) et une longueur dans la plage de 0,5 pouce (1,3 cm) à 12 pouces (30,5 cm) ; de préférence dans lequel le bâton a une section transversale ronde, une largeur de 0,5 pouce (1,3 cm) et une longueur de 4 pouces (10,2 cm).

3. Dispositif selon la revendication 1, comprenant en outre une tringlerie (100) reliant le piston (104) à une tige d'entraînement (101) ayant des filets externes (18), la tige d'entraînement (101) étant reliée à une broche (17) du moteur (108) ; et
comprenant en outre un écrou d'entraînement (103) attaché de manière fixe à la tringlerie (100), l'écrou d'entraînement ayant des filets internes (19) venant en prise de manière coopérative avec les filets externes (18) de la tige d'entraînement (101) ; et
comprenant en outre un palier de tige (102) fixé à la tringlerie (100) et recevant au moins une partie de la tige d'entraînement (101), le palier de tige (102) étant adapté pour fixer l'alignement de la tige d'entraînement (101) par rapport au piston (104), de préférence dans lequel le moteur (108) est un moteur pas à pas.

4. Dispositif selon la revendication 1, comprenant en outre un joint (106) entre la paroi latérale (11) du piston (104) et la paroi interne (5) du cylindre (6), dans lequel le joint est un joint torique élastomère.

5. Dispositif selon la revendication 1, comprenant en outre un élément chauffant (110) fixé à proximité de la buse (112), l'élément chauffant (110) étant conçu pour faire fondre le matériau de construction avant l'extrusion à partir de la buse (112).

6. Dispositif selon la revendication 1, comprenant en outre un moyen pour fournir un flux d'air annulaire autour d'une circonférence de l'article cosmétique en cours d'impression pour refroidir le matériau de construction, fusionner le matériau de construction avec le matériau de construction environnant et durcir le matériau de construction, après que le matériau de construction ait été déposé.

7. Dispositif selon la revendication 6, dans lequel le moyen pour fournir un flux d'air annulaire comporte un ventilateur (118) en communication fluidique avec une entrée d'air (22), un conduit (114) et une sortie d'air (139), le ventilateur (118) conduisant de l'air depuis l'entrée (22) à travers le conduit (114) jusqu'à la sortie (139), la sortie (139) étant conçue pour diriger l'air de manière annulaire autour de la circonférence de l'article en cours d'impression, de préférence dans lequel la sortie (139) a une configuration circulaire et est positionnée de manière coaxiale autour de la buse (112).

8. Dispositif selon la revendication 7, dans lequel le conduit (114) comprend en outre des déflecteurs internes (140) adaptés pour créer un débit uniforme à partir de la sortie d'air (139).

9. Dispositif selon la revendication 7 ou 8, dans lequel le ventilateur (118) est un ventilateur à vitesse variable, et le dispositif comprend en outre un commutateur (24) pour sélectionner une vitesse du ventilateur afin d'ajuster la vitesse de refroidissement de l'article en cours d'impression.

10. Dispositif selon la revendication 1, dans lequel le cylindre (105) est fabriqué à partir d'un matériau qui a une conductivité thermique inférieure à 3 BTU/(pieds heure °F) (18,7 kJ/mètre heure °C).

11. Dispositif selon la revendication 1, dans lequel le substrat (121) est choisi parmi une plaque, une coupelle et un récipient ; et/ou
dans lequel la plaque de construction (123) comprend en outre un évidement de substrat (124) façonné de manière coopérative pour recevoir le substrat (121).

12. Dispositif selon l'une quelconque des revendications 1 à 10, comprenant en outre un évidement de dimensionnement (128) dans la plaque de construction (123), l'évidement de dimensionnement (128) étant formé et dimensionné pour être plus grand que le substrat (121), l'évidement de dimensionnement (128) étant formé et dimensionné pour recevoir un insert de dimensionnement (122) de forme et de dimension correspondantes, l'insert étant fixé à la plaque de construction (123), l'insert (122) ayant une cavité de substrat (26) façonnée et dimensionnée de manière coopérative pour recevoir un substrat (121) de forme et de dimension correspondantes.

13. Dispositif selon l'une quelconque revendication précédente, comprenant en outre un clou (113) fixé à la seconde extrémité (8) du cylindre (6), le clou (113) définissant la chambre hémisphérique (111) en communication fluidique avec le cylindre (6),
dans lequel la buse d'extrusion (112) est fixée au clou (113), la buse d'extrusion (112) ayant une sortie de buse (13) au niveau d'une extrémité distale et une entrée de buse (15) au niveau d'une extrémité proximale, la chambre hémisphérique (111) étant en communication fluidique avec l'entrée de buse (15) et l'entrée de buse (15) étant en communication fluidique avec la sortie de buse (13) par l'intermédiaire d'un conduit de buse (14) ; et
dans lequel le réservoir (16) est défini par la partie du cylindre (6) entre la paroi avant (9) du piston (104) et la chambre hémisphérique (111) du clou (113), le piston (104) étant conçu pour appliquer une pression au matériau de construction pour faire avancer le matériau de construction du réservoir (16) dans la chambre hémisphérique (111) et extruder le matériau de construction à travers la sortie de buse (13) lorsque le piston (104) est avancé dans le cylindre (6) et pour appliquer une aspiration au niveau du matériau de construction pour retirer le matériau de construction dans la sortie de buse (13) lorsque le piston (104) est rétracté dans le cylindre (6), le dispositif de commande (28) étant programmé pour faire avancer le matériau de construction à travers la buse (112) afin de fabriquer le matériau de construction sur le substrat (121) pour fabriquer l'article cosmétique dans une forme tridimensionnelle.

14. Dispositif selon l'une quelconque revendication précédente, dans lequel la composition cosmétique comprend de la cire et/ou de l'huile.
